# EUROPÄISCHE PATENTSCHRIFT

(11) **EP 1 796 249 B1**
(45) Veröffentlichungstag und Bekanntmachung des Hinweises auf die Patenterteilung: **21.03.2012**
(21) Anmeldenummer: 06024356.5
(22) Anmeldetag: 24.11.2006
(51) Int. Cl.: H02K 21/24

(54) **Elektrische Maschine**
Electric machine
Machine électrique

(30) Priorität: 08.12.2005 DE 102005058576
(43) Veröffentlichungstag der Anmeldung: 13.06.2007
(73) Patentinhaber: Dietz-motoren GmbH & Co. KG, 73265 Dettingen/Teck (DE)
(72) Erfinder: Barth, Andreas, 74538 Rosengarten (DE); Strauss, Bernd, 72800 Eningen (DE)
(74) Vertreter: Ruckh, Rainer Gerhard

(56) Entgegenhaltungen:
- EP-A- 0 734 112
- EP-A1- 0 266 862
- WO-A-99/59233
- WO-A-2004/112222
- US-A- 4 187 441

## Beschreibung

Die Erfindung betrifft eine elektrische Maschine gemäß dem Oberbegriff des Anspruchs 1.

Eine derartige elektrische Maschine ist aus der WO 99/59233 A bekannt. Die dort beschriebene elektrische Synchronmaschine umfasst einen Stator und einen scheibenförmigen Rotor, der eine in Umfangsrichtung alternierende Anordnung von Permanentmagneten unterschiedlicher Polarität aufweist. Der Stator besteht aus aufgewickeltem streifenförmigen Material, in welches Nuten eingeschnitten sind, welche Aufnahmen für Statorwicklungen bilden.

Aus der EP 0 226 862 A1 ist eine elektrische Maschine bekannt, die ein Gehäuse aufweist, in welchem ein Stator und ein Rotor gelagert sind, wobei eine Rotorwelle aus dem Gehäuse herausgeführt ist. Der Rotor umfasst eine drehfest mit der Rotorwelle verbundene Rotorscheibe, auf deren dem Stator zugewandten Stirnseite Permanentmagnetsegmente angeordnet sind, welche in Umfangsrichtung aufeinander folgend jeweils eine entgegen gesetzte Polarität aufweisen. Der Stator besteht aus zwei Ferrit-Toroiden und weist Nuten zur Aufnahme von Spulenwicklungen auf. Zwischen Rator und Stator ist ein bezüglich der Drehachse der Rotorwelle ein axiales Luftspaltfeld generiert.

Aus der WO 00/48294 A1 ist eine elektrische Maschine bekannt, die in einem Gehäuse integriert ist. Eine Rotorwelle ist im Bereich der stirnseitigen Wände des Gehäuses gelagert, wobei ein Ende der Rotorwelle als Anschlusselement der Maschine aus dem Gehäuse herausgeführt ist. Der Stator der Maschine umfasst eine bezüglich der Rotorwelle drehsymmetrisch, stationär im Gehäuse gelagerte Anordnung von Elektromagnet-Bauelementen mit jeweils einer Spulenwicklung. Die Enden der Spulenwicklungen sind an eine Steuereinrichtung angeschlossen. Jeder Stirnseite des Stators liegt einer Läuferscheibe mit darauf angeordneten Permanentmagneten gegenüber. Die Permanentmagnete auf einer Läuferscheibe weisen in Umfangsrichtung aufeinander folgend jeweils entgegen gesetzte Polarität auf. Die Läuferscheiben sind an der Rotorwelle befestigt und rotieren mit dieser mit. Diese Läuferscheiben bilden den Rotor der Maschine. Durch Einspeisung eines Stromes in die Spulenwicklungen wird ein magnetisches Drehfeld erzeugt, welches in Wechselwirkung mit den auf den Läuferscheiben angeordneten Permanentmagneten eine Drehung des Rotors und der Rotorwelle bewirkt.

Der Erfindung liegt die Aufgabe zugrunde, eine elektrische Maschine bereitzustellen, welche ein hohes Leistungsgewicht aufweist und mit geringem Materialeinsatz kostengünstig herstellbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße elektrische Maschine kann als Motor oder Generator betrieben werden. Sie besteht aus einem Gehäuse, einer in diesem gelagerten und aus diesem herausgeführten Rotorwelle und einem im Gehäuse integrierten Rotor und Stator. Der Rotor umfasst eine drehfest mit der Rotorwelle verbundene Rotorscheibe. Auf deren dem Stator zugewandten Stirnseite sind Permanentmagnetsegmente angeordnet, welche in Umfangsrichtung aufeinander folgend jeweils eine entgegen gesetzte Polarität aufweisen. Der Stator weist einen ein Joch bildenden Blechpaketring auf, welcher Nuten zur Aufnahme von Spulenwicklungen aufweist. Zwischen Rotor und Stator ist bezüglich der Drehachse der Rotorwelle ein axiales Luftspaltfeld generiert. Innerhalb des Jochs erfolgt eine Magnetflussumkehr. Der Blechpaketring sitzt mit einer der Rotorscheibe abgewandten Stirnseite auf einer aus einem Material mit hoher Wärmeleitfähigkeit bestehenden Trägerscheibe auf.

Ein wesentlicher Aspekt der erfindungsgemäßen elektrischen Maschine besteht darin, dass diese als Rotor nur eine Rotorscheibe aufweist, auf deren dem Stator zugewandten Stirnseite die Permanentmagnetsegmente angeordnet sind. Dies führt zu einer erheblichen Reduzierung der Teile der elektrischen Maschine und damit zu einer kleinen Bauform sowie zu einer beträchtlichen Reduktion der Herstellkosten der elektrischen Maschine.

Eine wesentliche Voraussetzung dafür, dass eine Rotorscheibe zur Ausbildung des Rotors ausreichend ist, ist eine geeignete Dimensionierung des Jochs des Stators in Form des Blechpaketrings. Dabei sind insbesondere die Höhe des Blechpaketrings sowie die Dimensionierung der Nuten zur Aufnahme der Spulenwicklungen so dimensioniert, dass eine vollständige Umkehr des magnetischen Flusses im Blechpaketring erfolgen kann. Damit ist gewährleistet, dass während des Betriebs der elektrischen Maschine, bei welchem durch die Ströme in den Spulenwicklungen des Stators ein magnetisches Drehfeld erzeugt wird, der Magnetfluss vollständig innerhalb des Jochs geführt wird.

Das durch die Bestromung der Spulenwicklungen generierte magnetische Drehfeld ist durch die erfindungsgemäße Ausbildung des Rotors und Stators so ausgebildet, dass ein in axialer Richtung der Rotorwelle verlaufendes Luftspaltfeld generiert wird, das heißt das magnetische Drehfeld im Luftspalt verläuft parallel zur Drehachse der Rotorwelle.

Die Nuten in dem das Joch bildenden Blechpaketring verlaufen hierzu in radialer Richtung, so dass die dort geführten Spulenwicklungen Zahnbereiche umschließen, die in radialer Richtung des Blechpaketrings und somit parallel zur Drehachse der Rotorwelle orientiert sind. Durch diese Jochanordnung kann das Jochvolumen und damit das Gewicht des Jochs gegenüber Maschinen mit in radial verlaufenden Luftspaltfeldern erheblich reduziert werden. Dies führt zu einer materialsparenden Ausgestaltung des Jochs und damit insgesamt zu einer erheblichen Gewichtseinsparung bei der elektrischen Maschine. Bedingt durch das kleine Volumen des Jochs können auch die Eisenverluste im Joch gering gehalten werden, was in Zusammenhang mit der Permanenterregung der elektrischen Maschine zu einer Steigerung des Wirkungsgrades führt. Somit weist die erfindungsgemäße elektrische Maschine ein großes Leistungsgewicht auf.

Weiterhin kann durch das in axialer Richtung, das heißt parallel zur Drehachse der Rotorwelle verlaufende Luftspaltfeld der erfindungsgemäßen Maschine das Luftspaltbild sehr dicht an die Rotorwelle herangeführt werden, wodurch eine optimierte Drehmomenterzeugung ermöglicht wird.

Das Joch des Stators kann durch seine Ausbildung in Form eines Blechpaketrings besonders kostengünstig und rationell hergestellt werden. Der Blechpaketring wird beispielsweise durch Aufwickeln von Einzelblechen in Form von Blechstreifen hergestellt. Ebenso können einzelne Blechstreifen übereinander geschichtet und anschließend zu einem kreisförmigen Ring gebogen werden.

Die Nuten zur Führung der Spulenwicklungen verlaufen in gleichförmigen Winkelabständen in radialer Richtung des Blechpaketrings. Diese Nuten können durch gängige Bearbeitungsprozesse wie Stanzen, Fräsen oder Bohren in den Blechpaketring eingearbeitet werden. Prinzipiell können zur Ausbildung der Nuten auch in die zur Herstellung des Blechpaketrings verwendeten Blechstreifen Einstanzungen eingebracht werden, die sich dann im fertig gestellten Blechpaketring zu den Nuten ergänzen.

In einer vorteilhaften Ausführungsform ist der Blechpaketring über eine Verbindung aus Material mit hoher Wärmeleitfähigkeit an das Gehäuse angekoppelt, wodurch eine gute Ableitung der im Blechpaketring entstehenden Wärme beim Betrieb der elektrischen Maschine gewährleistet ist. Hierzu kann eine Vergussmasse mit hoher Wärmeleitfähigkeit zur Ankopplung des Blechpaketrings an das Gehäuse verwendet werden. Weiterhin kann der Blechpaketring auf einer mit dem Gehäuse verbundenen Trägerscheibe aufsitzen, die aus Material mit hoher Wärmeleitfähigkeit wie zum Beispiel Aluminium besteht.

Gemäß einer weiteren vorteilhaften Variante sitzt der Blechpaketring nicht auf einer Trägerscheibe sondern unmittelbar auf einem Lagerschild als stimseitigern Gehäuseabschluss auf. Diese Variante zeichnet sich durch eine besonders kleine und kompakte Bauform aus.

In einer weiteren vorteilhaften Ausführungsform kann die elektrische Maschine einen Dämpferkäfig aufweisen, der aus zwei konzentrischen Ringen, die über radial verlaufende Stäbe verbunden sind, besteht. Diese Konstruktion aus paramagnetischem oder diamagnetischem Werkstoff, insbesondere Aluminium umschließt die einzelnen Permanentmagnetsegmente am Rotor. Der so ausgebildete Dämpferkäfig kann äußerst platzsparend am Rotor integriert werden und ist zudem kostengünstig herstellbar.

Der Dämpferkäfig sorgt insbesondere beim Betrieb der Maschine als Motor dafür, dass bei Last- oder Drehzahländerungen keine unerwünschten Schwingungen der Rotorscheibe auftreten. Derartige Schwingungen werden durch in den Komponenten des Dämpferkäfigs induzierte Spannungen gedämpft.

Zur Erhöhung der Leistung der elektrischen Maschine kann diese mehrere Rotoren und Statoren mit jeweils identischem Aufbau aufweisen, die eine Reihenanordnung an der Rotorwelle bilden und im Gehäuse integriert sind. Vorteilhaft hierbei ist, dass bei dieser Mehrfachanordnung der Durchmesser der Maschine gegenüber einer Einzelanordnung eines Rotors und Stators nicht vergrößert wird.

Die Erfindung wird im Nachstehenden anhand der Zeichnungen erläutert. Es zeigen:
- Figur 1:: Ausführungsbeispiel der erfindungsgemäßen elektrischen Ma- schine mit einem Rotor und Stator.
- Figur 2:: Querschnitt durch den Rotor der elektrischen Maschine gemäß Figur 1.
- Figur 3:: Querschnitt durch den Stator der elektrischen Maschine gemäß Figur 1.

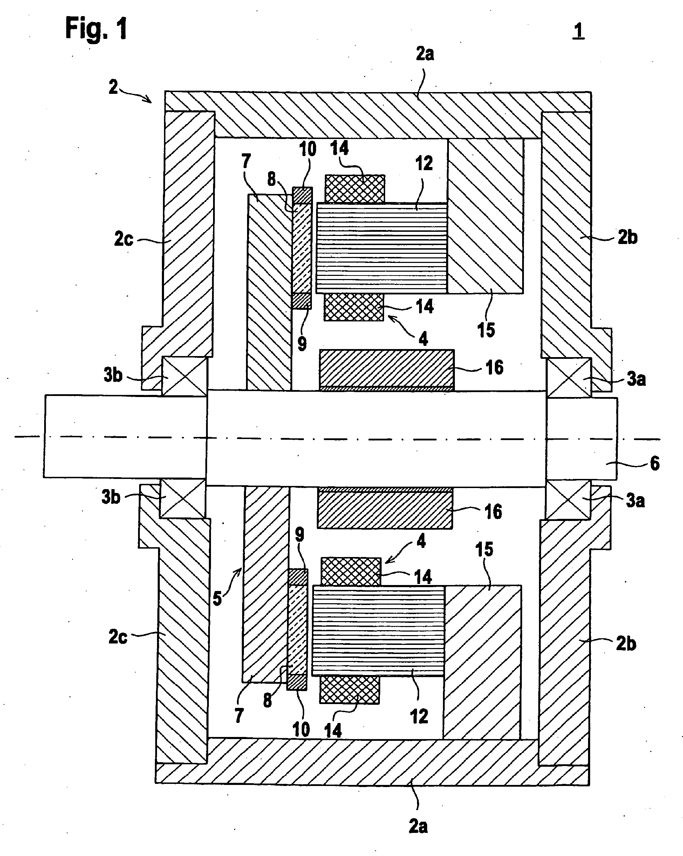

Figur 1 zeigt ein Ausführungsbeispiel einer elektrischen Maschine 1, welche als permanenterregter Motor oder Generator betrieben werden kann. Die Komponenten der elektrischen Maschine sind in einem hohlzylindrischen Gehäuse 2 integriert, welches einen Gehäusemantel 2a sowie zwei das Gehäuse stirnseitig abschließende Lagerschilde 2b, 2c umfasst. An den Lagerschilden 2b, 2c ist jeweils ein Lager 3a, b angeordnet. In den Lagern 3a, b ist als Bestandteil des mit einem Stator 4 zusammenwirkenden Rotors 5 der elektrischen Maschine eine Rotorwelle 6 drehbar gelagert. Die Drehachse verläuft in der in axialer Richtung des Gehäuses 2 verlaufenden Symmetrieachse. Wie aus Figur 1 ersichtlich, ist ein Ende der Rotorwelle 6 zum Anschluss an externe Einheiten aus dem Gehäuse 2 herausgeführt.

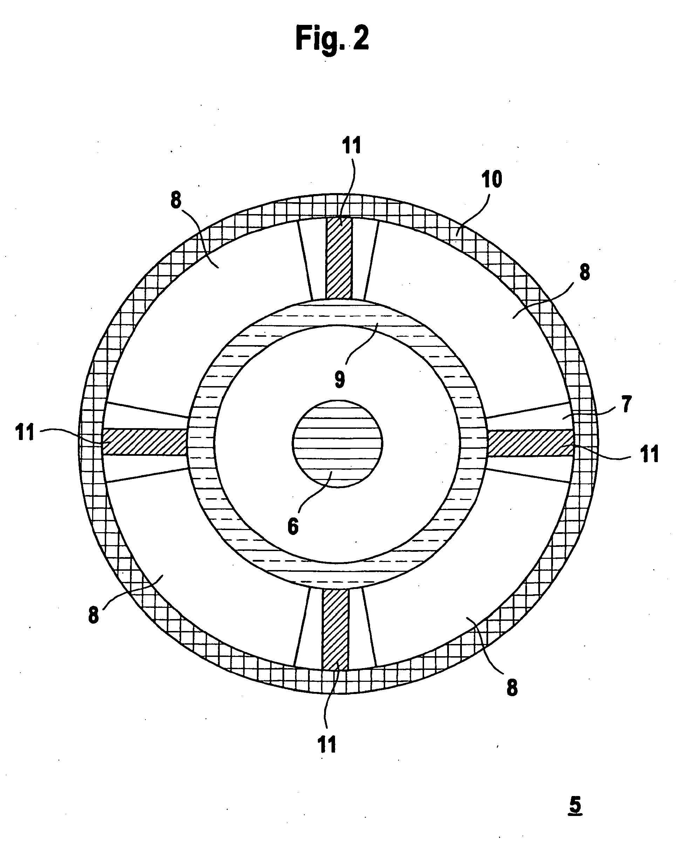

Als weiterer Bestandteil des Rotors ist an der Rotorwelle 6 eine kreisscheibenförmige Rotorscheibe 7 befestigt, die mit der Rotorwelle 6 um deren Drehachse drehbar ist. Der Rotor 5 mit der Rotorscheibe 7 ist in Figur 2 in einer Querschnittsdarstellung dargestellt.

An der dem Stator 4 der elektrischen Maschine 1 zugeordneten Stirnseite der Rotorscheibe 7 sind mehrere konzentrisch zur Drehachse des Rotors 5 in Umfangsrichtung aufeinander folgende Permanentmagnetsegmente 8 aufgebracht. Die Permanentmagnetsegmente 8 bilden eine alternierende Folge von Magnetelementen unterschiedlicher Polarität, das heißt Nord- und Südpole bildende Permanentmagnetsegmente 8 sind abwechselnd hintereinander angeordnet. Wie insbesondere aus Figur 1 ersichtlich, sind die Permanentmagnetsegmente 8 auf der Stirnseite der Rotorscheibe 7 aufgebracht, so dass diese über die Stirnseite der Rotorscheibe 7 hervorstehen. Prinzipiell können die Permanentmagnetsegmente 8 auch über die Stirnseite der Rotorscheibe 7 hervorstehen. Dadurch wird vermieden, dass die Magnetfelder der Permanentmagnetsegmente 8 in der Rotorscheibe 7 selbst vollständig geführt werden, wodurch ein magnetischer Kurzschluss in der Rotorscheibe 7 entstünde. Wie aus Figur 2 ersichtlich, sind im vorliegenden Fall vier identisch ausgebildete Permanentmagnetsegmente 8 auf der Rotorscheibe 7 vorgesehen. Die Rotorscheibe 7 besteht zumindest im Bereich der Permanentmagnetsegmente 8 aus ferromagnetischem Material. Im vorliegenden Fall besteht die gesamte Rotorscheibe 7 aus ferromagnetischem Material.

Zur Unterdrückung von Schwingungen der Rotorscheibe 7 beim Betrieb der elektrischen Maschine 1, insbesondere bei Last- und Drehzahländerungen, ist an der Rotorscheibe 7 zusätzlich ein Dämpferkäfig vorgesehen. Dieser Dämpferkäfig besteht aus zwei auf der dem Stator 4 zugewandten Stirnseite der Rotorscheibe 7 aufgebrachten Ringen 9, 10, die an die inneren beziehungsweise äußeren Ränder der Permanentmagnetsegmente 8 anschließen. Der Dämpferkäfig wird komplettiert durch in radialer Richtung auf der Rotorscheibe 7 verlaufende Stäbe 11, die die beiden Ringe 9, 10 verbinden und welche in den Zwischenräumen zwischen den Permanentmagnetsegmenten 8 geführt sind. Die Komponenten des Dämpferkäfigs umschließen somit die Permanentmagnetsegmente 8 vollständig. Die Komponenten des Dämpferkäfigs bestehen aus paramagnetischem oder diamagnetischem Werkstoff, insbesondere Aluminium. Treten bedingt durch Last- oder Drehzahländerungen beim Betrieb der elektrischen Maschine 1 Schwingungen in der Rotorscheibe 7 auf, so werden im Dämpferkäfig induzierte Spannungen induziert, welche die Schwingungen dämpfen.

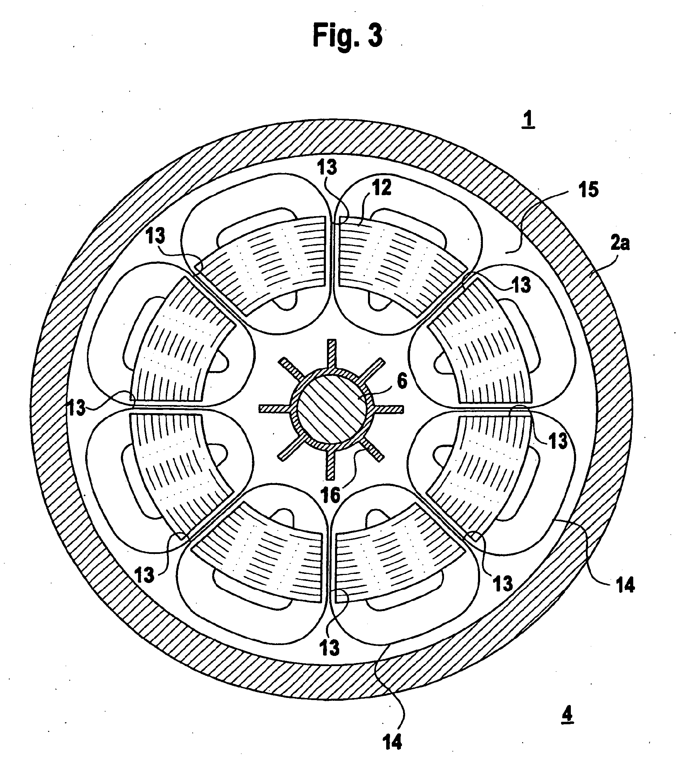

Der Stator 4 der elektrischen Maschine 1, der in Figur 3 separat dargestellt ist, weist als Joch einen kreisringförmigen Blechpaketring 12 auf, der konzentrisch zur Rotorwelle 6 angeordnet ist. Der Blechpaketring 12 ist so dimensioniert, dass eine seiner Stirnseiten den Permanentmagnetsegmenten 8 auf der Rotorscheibe 7 in geringem Abstand gegenüberliegt. Der Außendurchmesser des Blechpaketrings 12 ist an den Außendurchmesser der Rotorscheibe 7 angepasst. In den Blechpaketring 12 sind in radialer Richtung verlaufende Nuten 13 eingearbeitet. Die Nuten 13 sind in gleichförmigen Winkelabständen über den Blechpaketring 12 verteilt und münden an dessen Mantelfläche aus, wobei diese zumindest teilweise an der Mantelfläche des Blechpaketrings 12 offen liegen.

Die Nuten 13 des Blechpaketrings 12 dienen zur Aufnahme von Spulenwicklungen 14 als weiteren Komponenten des Stators 4. Die Spulenwicklungen 14 sind durch eine Harzimprägnierung am Blechpaketring 12 fixiert und an diesen angebunden. Durch die in radialer Richtung verlaufenden Nuten 13 und die darin geführten Spulenwicklungen 14 entstehen im Stator 4 Zahnbereiche, deren Achsen parallel zur Drehachse der Rotorwelle 6 verlaufen. Da die Zahnbereiche den Permanentmagnetsegmenten 8 an der Stirnseite der Rotorscheibe 7 gegenüberliegen, wobei dazwischen ein geringer Luftspalt verbleibt, wird bei der erfindungsgemäßen elektrischen Maschine 1 ein in axialer Richtung, das heißt parallel zur Drehachse der Rotorwelle 6 verlaufendes magnetisches Luftspaltfeld zwsichen Rotor 5 und Stator 4 erhalten. Gegenüber elektrischen Maschinen mit in radialer Richtung verlaufenden Luftspaltfeldern wird eine erhebliche Reduzierung des Jochvolumens und damit des Jochgewichts erhalten.

Das Joch in Form des Blechpaketrings 12 ist rationell und kostengünstig aus Einzelblechen herstellbar, die bevorzugt eine Dicke zwischen 0,1 mm bis 1 mm aufweisen. Die Einzelbleche können zuerst aufgeschichtet und dann zu einem Kreisring geformt werden. Alternativ kann der Blechpaketring 12 durch aufrollen eines langen Einzelblechs hergestellt werden. Die Nuten 13 können in den Blechpaketring 12 eingestanzt, eingefräst oder gebohrt werden. Prinzipiell können zur Ausbildung der Nuten auch Ausnehmungen in die Einzelbleche eingearbeitet werden, die sich dann bei Aufwickeln oder Aufschichten zur Ausbildung des Blechpaketrings 12 zu den Nuten ergänzen.

Je nach Ausführungsform der elektrischen Maschine 1 werden die Spulenwicklungen 14 in den Nuten 13 in der jeweiligen Phasenzahl, Polzahl und Wickelart ausgeführt. Die Wicklungsenden der Spulenwicklungen 14 sind eine nicht dargestellte Steuereinheit oder Leistungselektronik angeschlossen. Wird die elektrische Maschine 1 als Generator betrieben, wird das über das Gehäuse 2 hervorstehende Ende der Rotorwelle 6 angetrieben, wodurch die drehende Rotorscheibe 7 im Stator 4 ein elektrisches Drehfeld erzeugt, welches an den Enden der Spulenwicklungen 14 über die Leistungselektronik zur Stromerzeugung abnehmbar ist. Beim Betrieb der elektrischen Maschine 1 als Motor wird über die Steuereinheit oder Leistungselektronik ein Strom in die Spulenwicklungen 14 eingespeist, wodurch im Stator 4 ein magnetisches Drehfeld generiert wird, welches in Wechselwirkung mit den Permanentmagnetsegmenten 8 des Rotors 5 eine Drehung des Rotors 5 bewirkt.

Die Tiefe der Nuten 13 und die Höhe des Blechpaketrings 12 sind so dimensioniert, dass innerhalb des Blechpaketrings 12 eine vollständige Magnetflussumkehr erfolgen kann, das heißt die Magnetflusslinien verlaufen innerhalb des Blechpaketrings 12 und werden nicht über die dem Rotor 5 abgewandte Stirnseite aus diesem herausgeführt. Diese Dimensionierung des Blechpaketrings 12 ist Voraussetzung dafür, dass die erfindungsgemäße elektrische Maschine 1 nur eine Rotorscheibe 7 als Rotor 5 aufweisen kann.

Wie aus den Figuren 1 und 3 ersichtlich, sitzt der Blechpaketring 12 mit einer der Rotorscheibe 7 abgewandten Stirnseite auf einer kreisringförmigen Trägerscheibe 15 auf, die mit ihrem äußeren Rand an der Innenseite des Gehäusemantels befestigt ist. Die Trägerscheibe 15 ist konzentrisch zur Rotorwelle 6 angeordnet und besteht aus einem Material mit hoher Wärmeleitfähigkeit, insbesondere aus Aluminium. Die Trägerscheibe 15 dient somit nicht nur als Halterung für den Blechpaketring 12 im Gehäuse 2 sondern zusätzlich zur Ableitung der Wärme, die im Blechpaketring 12 und den Spulenwicklungen 14 beim Betrieb der elektrischen Maschine 1 entsteht.

In einer nicht dargestellten alternativen Ausführungsform kann der Blechpaketring 12 direkt auf dem Lagerschild 2b aufsitzen, was zu einer sehr kleinen Bauform der elektrischen Maschine 1 führt.

Zur Gewährleistung einer guten thermischen Anbindung der Wärmeerzeuger der elektrischen Maschine 1 an das Gehäuse 2, insbesondere des Blechpaketrings 12 mit den Spulenwicklungen 14, kann der Gehäuseinnenraum mit einer gut wärmeleitenden Vergussmasse vergossen werden.

Die Entwärmung der elektrischen Maschine 1 kann insbesondere mittels freier Konvektion über das Gehäuse 2 erfolgen. Hierzu ist im vorliegenden Fall an der Rotorwelle 6 ein Lüfterflügel 16 befestigt, der sich mit der Rotorwelle 6 mitdreht. Weiterhin können zur Oberflächenvergrößerung der Innenfläche des Gehäuses 2 an den Innenseiten des Gehäusemantels 2a und der Lagerschilde 2b, 2c nicht dargestellte Kühlrippen vorgesehen sein. Schließlich können die Lagerschilde 2b, 2c nicht dargestellte Öffnungen enthalten, wodurch eine Durchzugsbelüftung des Innenraums des Gehäuses 2 ermöglicht wird. Alternativ oder zusätzlich können der elektrischen Maschine 1 Fremdbelüftungseinheiten zugeordnet sein. Weiterhin können auch im Gehäuse 2 verlaufende Kühlkanäle zwecks Flüssigkeitskühlung vorgesehen sein.

### Bezugszeichenliste

- (1): elektrische Maschine
- (2): Gehäuse
- (2a): Gehäusemantel
- (2b): Lagerschild
- (2c): Lagerschild
- (3a): Lager
- (3b): Lager
- (4): Stator
- (5): Rotor
- (6): Rotorwelle
- (7): Rotorscheibe
- (8): Permanentmagnetsegment
- (9): Ring
- (10): Ring
- (11): Stab
- (12): Blechpaketring
- (13): Nut
- (14): Spulenwicklung
- (15): Trägerscheibe
- (16): Lüfterflügel

## Patentansprüche

1. Elektrische Maschine (1), betreibbar als Motor oder Generator, mit einem Gehäuse (2), einer in diesem gelagerten und aus diesem herausgeführten Rotorwelle (6) und einem Rotor (5) und Stator (4) im Gehäuse (2), wobei der Rotor (5) eine drehfest mit der Rotorwelle (6) verbundene Rotorscheibe (7) umfasst, auf deren dem Stator (4) zugewandten Stirnseite Permanentmagnetsegmente (8) angeordnet sind, welche in Umfangsrichtung aufeinander folgend jeweils eine entgegen gesetzte Polarität aufweisen, wobei der Stator (4) einen ein Joch bildenden Blechpaketring (12) aufweist, welcher Nuten (13) zur Aufnahme von Spulenwicklungen (14) aufweist, und wobei zwischen Rotor (5) und Stator (4) ein bezüglich der Drehachse der Rotorwelle (6) axiales Luftspaltfeld generiert ist, wobei die Tiefen der Nuten (13) und die Höhe des Blechpaketrings (12) so dimensioniert sind, dass innerhalb des Jochs eine Magnetflussumkehr erfolgt, **dadurch gekennzeichnet dass** der Blechpaketring (12) an einem Lagerschild (2b), der Bestandteil des Gehäuses (2) ist, gelagert ist, dass der Blechpaketring (12) mittels einer Vergussmasse mit hoher Wärmeleitfähigkeit an das Gehäuse (2) angebunden ist, und dass der Blechpaketring (12) mit einer der Rotorscheibe (7) abgewandten Stirnseite auf einer aus einem Material mit hoher Wärmeleitfähigkeit bestehenden Trägerscheibe (15) aufsitzt.

2. Maschine nach Anspruch 1, **dadurch gekennzeichnet, dass** der Blechpaketring (12) aus aufgewickelten oder geschichteten Einzelblechen besteht.

3. Maschine nach einem der Ansprüche 1 oder 2, **dadurch gekennzeichnet, dass** die Nuten (13) an dem konzentrisch zur Rotorwelle (6) angeordneten Blechpaketring (12) in radialer Richtung verlaufen.

4. Maschine nach einem der Ansprüche 1 bis 3, **dadurch gekennzeichnet, dass** die Nuten (13) in gleichmäßigen Winkelabständen in den Blechpaketring (12) eingearbeitet sind.

5. Maschine nach Anspruch 4, **dadurch gekennzeichnet, dass** Segmente der Nuten (13) an der dem Rotor (5) zugewandten Stirnseite des Blechpaketrings (12) ausmünden.

6. Maschine nach einem der Ansprüche 1 bis 5, **dadurch gekennzeichnet, dass** die Permanentmagnetsegmente (8) zumindest teilweise über die dem Stator (4) zugewandte Stirnseite der Rotorscheibe (7) hervorstehen.

7. Maschine nach Anspruch 6, **dadurch gekennzeichnet, dass** die Rotorscheibe (7) zumindest im Bereich der Permanentmagnetsegmente (8) aus ferromagnetischem Material besteht.

8. Maschine nach einem der Ansprüche 1 bis 7, **dadurch gekennzeichnet, dass** der Blechpaketring (12) auf einer Trägerscheibe (15) gelagert ist und über diese am Gehäuse (2) fixiert ist.

9. Maschine nach Anspruch 8, **dadurch gekennzeichnet, dass** die Trägerscheibe (15) aus einem Material mit hoher Wärmeleitfähigkeit besteht.

10. Maschine nach einem der Ansprüche 1 bis 9, **dadurch gekennzeichnet, dass** die Lagerschilde (2b, 2c) des Gehäuses (2) mit Öffnungen versehen sind.

11. Maschine nach einem der Ansprüche 1 bis 10, **dadurch gekennzeichnet, dass** an den Innenseiten des Gehäuses (2) Kühlrippen vorgesehen sind.

12. Maschine nach einem der Ansprüche 1 bis 11, **dadurch gekennzeichnet, dass** an der Rotorwelle (6) wenigstens ein Lüfterflügel (16) drehfest gelagert ist.

13. Maschine nach einem der Ansprüche 1 bis 12, **dadurch gekennzeichnet, dass** auf der Rotorscheibe (7) ein Dämpferkäfig vorgesehen ist.

14. Maschine nach Anspruch 13, **dadurch gekennzeichnet, dass** zur Ausbildung des Dämpferkäfigs zwei bezüglich der Drehachse der Rotorwelle (6) konzentrische metallische Ringe (9, 10) vorgesehen sind, zwischen welchen die Permanentmagnetsegmente (8) angeordnet sind, wobei die Ringe (9, 10) durch in radialer Richtung zwischen den einzelnen Permanentmagnetsegmenten (8) verlaufende metallische Stäbe (11) verbunden sind.

15. Maschine nach einem der Ansprüche 1 bis 14, **dadurch gekennzeichnet, dass** diese eine Mehrfachanordnung von Rotoren (5) und zugeordneten Statoren (4) aufweist, wobei diese an der Rotorwelle (6) eine Reihenanordnung bilden.

## Claims

1. Electrical machine (1), which is operable as a motor or generator, with a housing (2), a rotor shaft (6) mounted therein and guided out therefrom, and a rotor (5) and stator (4) in the housing (2), wherein the rotor (5) comprises a rotor disc (7), which is connected with the rotor shaft (6) to be secure against rotation relative thereto and on the end face of which facing the stator (4) permanent magnet segments (8) are arranged, which have respectively opposed polarity in succession in circumferential direction, wherein the stator (4) comprises a laminated core ring (12) which forms a yoke and which has grooves (13) for reception of coil windings (14), and wherein an air gap field which is axial with respect to the axis of rotation of the rotor shaft (6) is generated between rotor (5) and stator (4), wherein the depth of the grooves (13) and the height of the laminated core ring (12) are so dimensioned that a magnetic flux reversal takes place within the yoke, **characterised in that** the laminated core ring (12) is mounted on a end plate (2b), which is a component of the housing (2), that the laminated core ring (12) is connected with the housing (2) by means of a casting material with high thermal conductivity and that the laminated core ring (12) is seated by an end face, which is remote from the rotor disc (7), on a carrier disc (15) consisting of a material with high thermal conductivity.

2. Machine according to claim 1, **characterised in that** the laminated core ring (12) consists of wound or layered individual plates.

3. Machine according to one of claims 1 and 2, **characterised in that** the grooves (13) extend in radial direction at the laminated core ring (12) arranged concentrically with respect to the rotor shaft (6).

4. Machine according to any one of claims 1 to 3, **characterised in that** the grooves (13) are formed in the laminated core ring (12) at uniform angular spacings.

5. Machine according to claim 4, **characterised in that** the segments of the grooves (13) open at the end face of the laminated core ring (12) facing the rotor (5).

6. Machine according to any one of claims 1 to 5, **characterised in that** the permanent magnet segments (8) protrude at least in part beyond the end face of the rotor disc (7) facing the stator (4).

7. Machine according to claim 6, **characterised in that** the rotor disc (7) consists of a ferromagnetic material at least in the region of the permanent magnet segments (8).

8. Machine according to any one of claims 1 to 7, **characterised in that** the laminated core ring (12) is mounted on a carrier disc (15) and fixed by way of this to the housing (2).

9. Machine according to claim 8, **characterised in that** the carrier disc (15) consists of a material with high thermal conductivity.

10. Machine according to any one of claims 1 to 9, **characterised in that** the end plates (2b, 2c) of the housing (2) are provided with openings.

11. Machine according to any one of claims 1 to 10, **characterised in that** cooling ribs are provided at the inner sides of the housing (2).

12. Machine according to any one of claims 1 to 11, **characterised in that** at least one fan blade (16) is mounted on the rotor shaft (6) to be secure against relative rotation.

13. Machine according to any one of claims 1 to 12, **characterised in that** a dampening cage is provided on the rotor disc (7).

14. Machine according to claim 13, **characterised in that** provided for construction of the dampening cage are two metallic rings (9, 10) which are concentric with respect to the axis of rotation of the rotor shaft (6) and between which the permanent magnet segments (8) are arranged, wherein the rings (9, 10) are connected by metallic rods (11) extending in radial direction between the individual permanent magnet segments (8).

15. Machine according to any one of claims 1 to 14, **characterised in that** this comprises a multiple arrangement of rotors (5) and associated stators (4), wherein these form a serial arrangement at the rotor shaft (6).

## Revendications

1. Machine électrique (1), pouvant fonctionner comme moteur ou générateur, avec un boîtier (2), un arbre de rotor (6) monté dans celui-ci et conduit à l'extérieur de celui-ci et avec un rotor (5) et un stator (4) dans le boîtier (2), le rotor (5) comprenant un disque de rotor (7) relié de manière solidaire en rotation à l'arbre de rotor (6), sur la face frontale duquel qui est tournée vers le stator (4) sont disposés des segments d'aimant permanent (8) qui présentent successivement une polarité opposée en direction circonférentielle, le stator (4) présentant un paquet de tôles annulaire (12) formant une culasse, lequel présente des encoches (13) pour recevoir des enroulements de bobine (14), et un champ d'entrefer axial par rapport à l'axe de rotation de l'arbre de rotor (6) étant généré entre rotor (5) et stator (4), la profondeur des encoches (13) et la hauteur du paquet de tôles annulaire (12) étant dimensionnées de façon qu'une inversion de flux magnétique se produise à l'intérieur de la culasse, **caractérisée en ce que** le paquet de tôles annulaire (12) est monté sur un flasque (2b) qui fait partie du boîtier (2), que le paquet de tôles annulaire (12) est relié au boîtier (2) au moyen d'une masse de scellement à haute conductivité thermique et que le paquet de tôles annulaire (12) repose par une face frontale opposée au disque de rotor (7) sur un disque support (15) composé d'un matériau à haute conductivité thermique.

2. Machine selon la revendication 1, **caractérisée en ce que** le paquet de tôles annulaire (12) est composé de tôles individuelles enroulées ou stratifiées.

3. Machine selon une des revendications 1 ou 2, **caractérisée en ce que** les encoches (13) s'étendent en direction radiale sur le paquet de tôles annulaire (12) disposé concentriquement à l'arbre de rotor (6).

4. Machine selon une des revendications 1 à 3, **caractérisée en ce que** les encoches (13) sont pratiquées à intervalles angulaires réguliers dans le paquet de tôles annulaire (12).

5. Machine selon la revendication 4, **caractérisée en ce que** des segments des encoches (13) débouchent sur la face frontale du paquet de tôles annulaire (12) tournée vers le rotor (5).

6. Machine selon une des revendications 1 à 5, **caractérisée en ce que** les segments d'aimant permanent (8) sont au moins partiellement en saillie par rapport à la face frontale du disque de rotor (7) tournée vers le stator (4).

7. Machine selon la revendication 6, **caractérisée en ce que** le disque de rotor (7) est composé de matériau ferromagnétique au moins dans la région des segments d'aimant permanent (8).

8. Machine selon une des revendications 1 à 7, **caractérisée en ce que** le paquet de tôles annulaire (12) est monté sur un disque support (15) et est fixé au boîtier (2) par l'intermédiaire de celui-ci.

9. Machine selon la revendication 8, **caractérisée en ce que** le disque support (15) est composé d'un matériau à haute conductivité thermique.

10. Machine selon une des revendications 1 à 9, **caractérisée en ce que** les flasques (2b, 2c) du boîtier (2) sont pourvus d'ouvertures.

11. Machine selon une des revendications 1 à 10, **caractérisée en ce que** des ailettes de refroidissement sont prévues sur les côtés intérieurs du boîtier (2).

12. Machine selon une des revendications 1 à 11, **caractérisée en ce qu'**au moins une ailette de ventilateur (16) est montée de manière solidaire en rotation sur l'arbre de rotor (6).

13. Machine selon une des revendications 1 à 12, **caractérisée en ce qu'**une cage d'amortissement est prévue sur le disque de rotor (7).

14. Machine selon la revendication 13, **caractérisée en ce que** pour former la cage d'amortissement, il est prévu deux anneaux métalliques (9, 10) concentriques à l'axe de rotation de l'arbre de rotor (6), entre lesquels sont disposés les segments d'aimant permanent (8), les anneaux (9, 10) étant reliés par des tiges métalliques (11) qui s'étendent en direction radiale entre les différents segments d'aimant permanent (8).

15. Machine selon une des revendications 1 à 14, **caractérisée en ce que** celle-ci présente une disposition multiple de rotors (5) et de stators (4) associés, ceux-ci formant une disposition en série sur l'arbre de rotor (6).
